Europäisches Patentamt

(19) European Patent Office

Office européen des brevets

(11) Publication number: **0 213 834**
**B1**

# EUROPEAN PATENT SPECIFICATION

(45) Date of publication of the patent specification:
07.11.90

(21) Application number: 86306200.6

(22) Date of filing: 11.08.86

(51) Int. Cl.⁵: **B65D 3/22**

(54) Beverage can.

(30) Priority: 12.08.85 US 764690

(43) Date of publication of application:
11.03.87 Bulletin 87/11

(45) Publication of the grant of the patent:
07.11.90 Bulletin 90/45

(84) Designated Contracting States:
AT BE CH DE FR GB IT LI LU NL SE

(56) References cited:
GB-A- 958 073
US-A- 3 266 390
US-A- 4 004 727

(73) Proprietor: SHELL INTERNATIONALE RESEARCH
MAATSCHAPPIJ B.V., Carel van Bylandtlaan 30,
NL-2596 HR Den Haag(NL)

(72) Inventor: Schmeal, Walter Richard, 5327 Mandell,
Houston Texas 77005(US)
Inventor: Singhal, Surendra Nath, 15427, Rio del Sol,
Houston Texas 77083(US)
Inventor: Lo, King Him, 6827 Escondido Drive, Houston
Texas 77083(US)

(74) Representative: Aalbers, Onno et al, P.O. Box 302,
NL-2501 CH The Hague(NL)

ACTORUM AG

**Description**

The present invention seeks to provide a fiber wound container plastic beverage can which will withstand pressure from carbonated beverages, which has low swelling (or stretching) properties, and which has a fabrication cost less than that of a typicaliy used aluminum can.

Numerous sizes, shapes and forms of beverage cans are available to the consumer. Many cans are made of aluminum, in particular those which must withstand high pressure conditions of carbonated beverages, such as soft drinks, and thus rely on the strength of the aluminum as a can wall material. Various shapes, forms and sizes of beverage bottles are also available, but this invention is addressed to cans and not bottles.

The performance criteria for carbonated beverage cans are:

1) A can must have a low permeability so as to ensure a shelf life (during storage at, for example, supermarkets and home) for up to 4 months. This means a maximum loss of 16% $CO_2$ for the typical carbonated beverage can.

2) A can must be strong enough to withstand a pressure of 0.6 MPa gauge (87 psig) at a 35°C (95°F) liquid temperature. This is so that cans stored in hot warehouses or automobiles for extended periods of time will not burst, split, crack or otherwise fail at a pressure below the buckling stability limit of the can lid. This pressure is about 0.6 MPa gauge (87 psig) for a conventional pull tab aluminum lid.

3) A can should be able to withstand axial loads which occur when cans are stacked in warehouses and during end seaming of tops and bottoms.

4) The volume stability of a can is very important. The can must retain cosmetic and structural integrity, to allow performance in the vending distribution channel. Thus, the can should have nonexistent or low creep tendency at 35°C (95°F) liquid temperature and 0.6 MPa gauge (87 psig).

Performance criteria 2) and 4) are the most important and the most difficult to meet when fabricating a carbonated beverage can.

Heretofore, the fabrication of plastic cans has been difficult, US-A-4,379,014 discloses a plastic beverage can which is fabricated by winding thermoplastic tape around a mandrel and then reinforcing the tape. A single, homogeneous polyester sheet material is used to construct a container, presumably for vessels capable of withstanding internal pressure, for example those containing carbonated beverages. As taught, the homogeneous oriented sheet is wrapped monodirectionally and continuously onto a mandrel to form a cylinder. As taught this document there is no possibility of separating two important functions of the container wall: 1) to provide a continuous vessel wall to prevent leakage, and 2) to provide the necessary strength when pressurized. Because the sheet material functions as both the strength material and the homogeneous and continuous finished container wall, the sheet material must be continuous to prevent leakage.

. Further, US-A-4379014 does not teach the use of barrier layers to prevent carbonation loss in beverage containers. It is well known in the art of beverage containers formed of polyester material that carbonation loss is significant performance factor, especially in smaller sized containers (0.47 litres (16 U.S. fluid ounces) or less) where the ratio of the volume of the carbonated contents to the surface area of the container is high. In homogeneous, thin wall polyester vessels as taught in US-A-4379014 such a barrier layer would be required for carbonated beverage containers in order to meet shelf life requirements in smaller sized containers.

US-A-3662944 discloses a batch process for making containers one at a time, rather than a continuous process. This patent also does not teach the fiber wrap angles which must be employed in making a fiber wound plastic beverage can. Also required in US-A-3662944 is a plastic layer, with or without an aluminum foil "label" layer, which is necessary to support the wound fibers to impart the rigidity necessary of such a container.

US-A-2873226 teaches another batch process wherein a polystyrene inner form and a thermoset resin system is used as an adhesive.

US-A-3735895 teaches a non-pressurized vessel with glass fibers bound by epoxy resin.

US-A-3098582 teaches a batch process where a curing resin system is used as an adhesive.

The present invention provides a carbonated beverage can which has a barrier layer to give good product shelf life and low permeability, and which has sufficient strength to withstand the pressures of a carbonated beverage at the temperatures to which it might be subjected, sufficient axial load bearing stiffness and strength so that the top closure may be joined and the cans may be stacked in warehouses, good volume stability, i.e. no excessive swelling, which retains cosmetic and structural integrity, and which feels like a can and will gain consumer acceptance. Furthermore, the can can be continuously fabricated.

According to the invention there is provided a beverage can for carbonated beverages which comprises a can wall made of a thermoplastic core and at least one fiber wound adhesive layer on said thermoplastic core, the can wall comprising a barrier layer being of low permeability to $CO_2$ and contiguous

with either said thermoplastic core or said fiber wound adhesive layer or contained within said thermoplastic core or said fiber wound adhesive layer.

The beverage can of the invention thus has a can wall made of thermoplastic materials and is provided with ends which may be made of thermoplastic or metallic materials. The can is capable of withstanding pressure by (1) the use of a continuously fabricated homogeneous core providing the container body/wall (function to prevent leakage) upon which: (2) fiber strands (strength function) are wound/applied, said fibers not necessarily being homogeneous in their coverage of the container body/wall, and is also capable of resisting volume swelling.

The invention will be described in more detail by reference to the accompanying drawings, in which:

Fig. 1 is a cross-section, partly in perspective, of the wall of carbonated beverage can fabricated in accordance with the invention;

Fig. 2 is a flow sheet which illustrates the basic process steps involved in fabricating a filled beverage can in accordance with the invention;

Fig. 3 is a schematic side elevation illustrating the step of core making of the process summarised in Fig. 2;

Fig. 4 is a schematic side elevation illustrating the step of fiber winding a core in the process summarised in Fig. 2;

Fig. 5 is a schematic side elevation illustrating the step of labelling, cutting and bottom joining a fiber-wound core in the process summarised in Fig. 2; and

Fig. 6 is a graph showing the relationship between fiber coverage per layer of a fiber wound core and its burst strength.

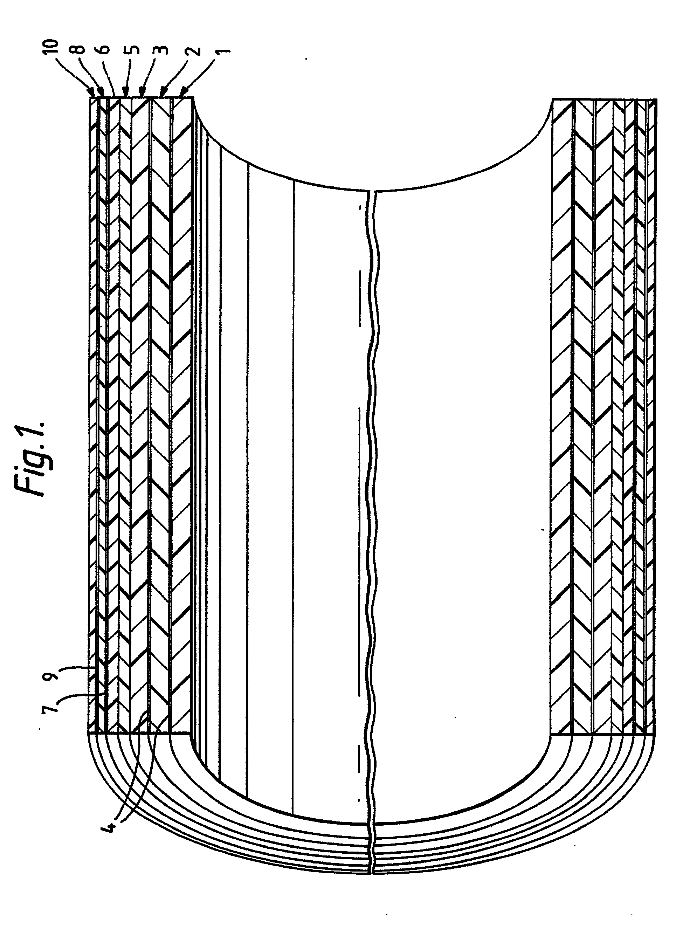

Referring now to Fig. 1 there is shown a fiber wound soft drink can which has a film wound wall which, beginning at the innermost layer, is fabricated of a polypropylene film 1, a polypropylene film 2 and a polypropylene film 3, which are contiguous one with another and which are bonded by adhesive layers 4 between the layers of films 1 and 2 and films 2 and 3. An extruded core may be used instead of a film wound core as illustrated in Fig. 1. Adjacent to film 3 is a barrier layer 5 of latex "Saran" (copolymer of vinylidene chloride). Adjacent barrier layer 5 is a layer of polyethylene terephthate (PET) fiber 6. Fiber layer 6 is bonded by an adhesive layer 7 to a second PET fiber layer 8. Fiber layer 8 is in turn bonded by adhesive layer 9 to a label film 10.

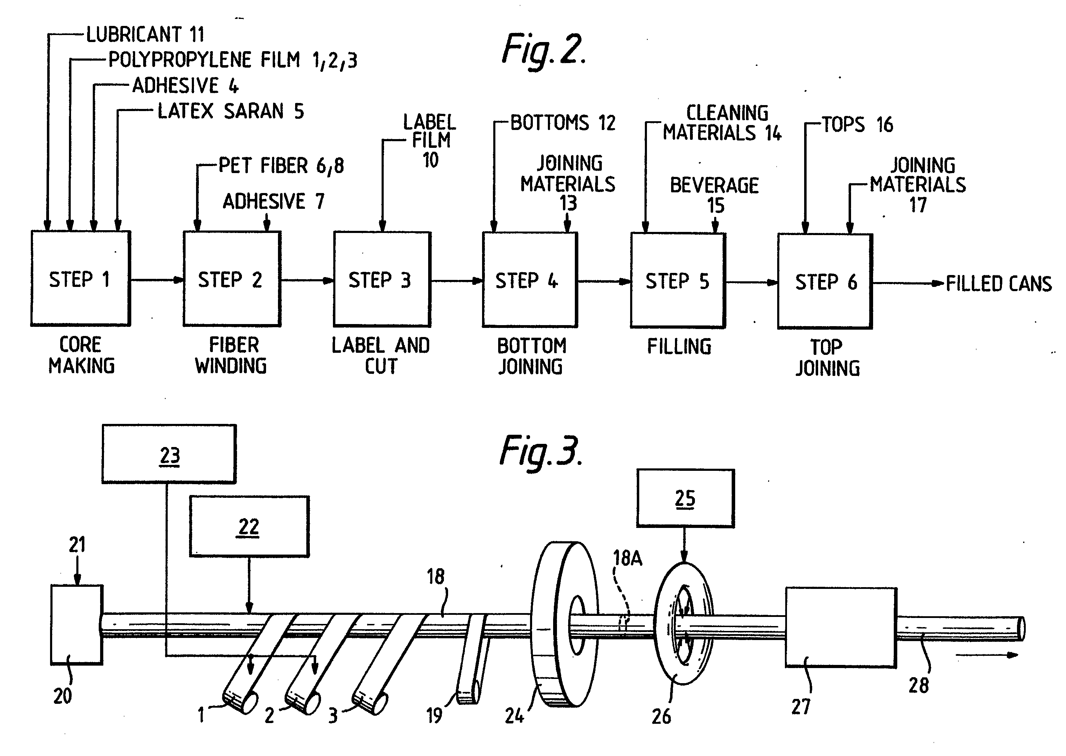

Fig. 2 is a flow sheet illustrating one method of fabrication of the fiber wound beverage can. In Step 1, (core making), lubricant 11, polypropylene films 1, 2 and 3, adhesive 4, and latex Saran 5 are combined to make the core. In Step 2 (fiber winding), wound PET fiber layers 6 and 8 and adhesive 7 are added to the core. In Step 3 (labeling and cutting) a label film 10 is applied and a can length is cut from the fiber wound core. In Step 4 (bottom joining), can bottoms 12 and joining materials 13 are used to attach the bottoms 12 to the can. In Step 5 (filling), cleaning materials 14 and beverage 15 are used to clean the can and fill it with the desired beverage. In Step 6 (top joining), tops 16 and joining materials 17 are used to join the tops 16 to the can.

Fig. 3 illustrates Step 1 (core making) in more detail. A mandrel 18 (ending at 18A) is affixed with a belt drive 19 to rotate the mandrel 18. A torpedo control mechanism 20 is attached to the end of madrel 18 and a source of air 21 is provided to torpedo control mechanism 20. The mandrel 18 is lubricated from lubricant tank 22 and adhesive from adhesive tank 23 is applied to polypropylene films 1 and 2. Films 1, 2 and 3 are sequentially wrapped at an appropriate angle around mandrel 18. Films 1, 2 and 3 are then treated by film treater 24. At some point after treatment of films 1, 2 and 3, mandrel 18 ends. "Saran" latex from tank 25 is then applied to the moving films by an applicator 26. The films progress through dryer 27 and emerges as core 28.

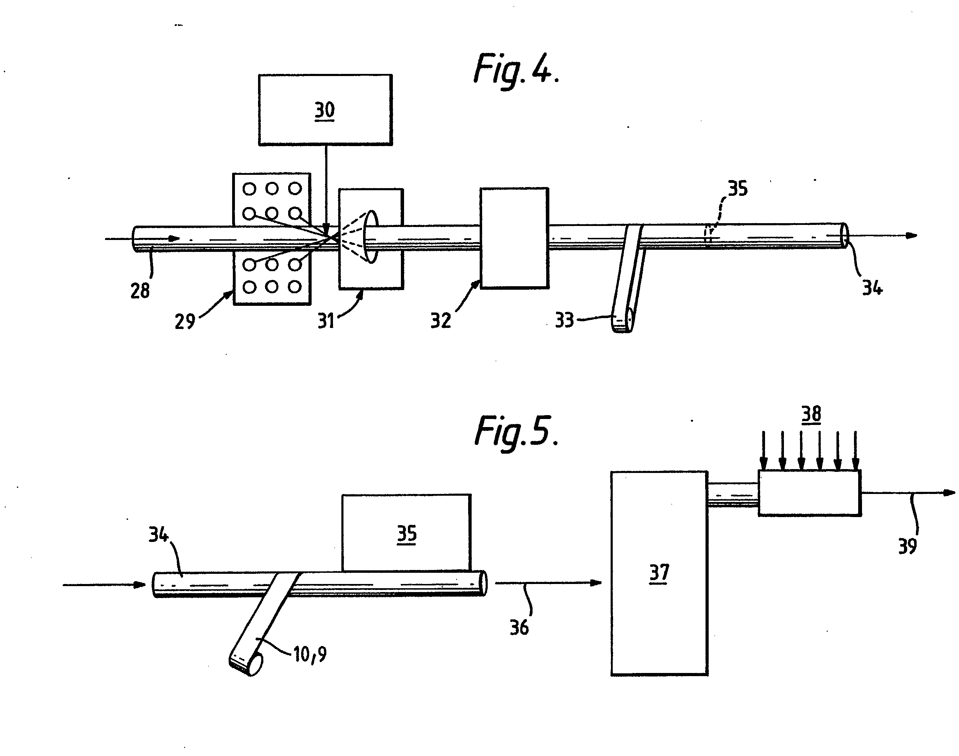

Core 28 then passes to Step 2 (fiber winding) as shown in Fig. 4. Core 28 passes through a stationary fiber stage 29, adhesive 7 is applied from adhesive tank 30 to core 28 and a spiral winder 31 winds the fibers from stationary fiber stage 29 onto core 28. Core 28 is passed through fiber dryer 32 and belt puller 33 and emerges as wound core 34. A torpedo seal 35 resides inside the wound core 34 and is attached to the torpedo control mechanism 20 by a stationary torpedo control wire which passes through a hole in the center of the mandrel 18 and also through the center of the moving core 28. The purpose of the seal 35 is to retain pressure to prevent failure of the core 28 due to torques applied by the stationary fiber stage 29 and the spiral winder 31.

As shown in Fig. 5 which illustrate Step 3, the wound core 34 is wrapped by label film 10 provided with adhesive 9. Traveling saw 35 cuts wound core 34 into 1.2 meter (four feet) lengths 36 and transfers lengths 36 onto a conveyor 37 and then through a slit saw 38 provided with a plurality of heads to cut the wound core 34 into appropriate lengths for the cans. The bodies of the can 39 are then sent to Step 4 as by a conveyor to have bottoms 12 joined, to be filled with beverage 15, and to have tops 16 joined.

The core may be made of polypropylene, polyethylene, polyketone, polyethylene terephthalate (PET), or some other suitable material or combination of materials. The core may be constructed by extrusion, or core winding of films onto a lubricated fixed mandrel. The core may be of any thickness but 0.25 - 0.76 mm (0.010 - 0.030 inches) is preferred. The core should be homogeneous enough to prevent leakage and also rigid enough to allow the application of the fibers at stationary and spiral winding stages 29 and 31.

Example 1 - Core Making

A 0.33 mm (13 mil) extruded polypropylene core of about 6.6 cm (2.6 inch) outside diameter was pressurized with air and torque was applied to simulate winding torques. The torque to failure is noted below in Table 1 as a function of the applied internal air pressure. Bursting occurred at (40 psi).

TABLE 1

| APPLIED PRESSURE kPa (psi) | Torque at Failure Nm (inch-lb) |
|---|---|
| 0 (0) | 1.7 (15) |
| 55 (8) | 19.2 (170) |
| 103 (15) | 25.4 (225) |
| 124 (18) | 28.2 (250) |
| 276 (40) | burst |

The thermoplastic core may be filled with inert material or recycled plastic for the purpose of allowing faster extrusion and lowering cost. Examples of filling materials are $CaCO_3$, mica and talc. A barrier to reduce the rate of diffusion of water and gases such as $CO_2$ and $O_2$ may be added to the core by coextrusion, or by application contiguous to or within the fiber-adhesive layer. Adhesives may be applied to either side of the barrier. The purpose of the barriers is to enhance the utility of the container. Examples of such materials are SARAN (copolymer of vinylidene chloride) and EVOH (hydrolzed copolymers of vinyl acetate and ethylene). These may be applied by spraying such material in a latex form onto the exterior of the core or extruding the barrier within the base core material, or as an integral or laminated film in the film wound core construction. The coextrusion may include additional layers of adhesives on either or both sides of the barrier. As example might be ABA, ABC, or ACBCA, where A is the base core material, B is a barrier and C is an adhesive. The first letter designates the internal layer and the last letter the external layer.

Various fibers may be used in this invention. Suitable fibers are those of glass, polyethylene terephthalate (PET), nylon, rayon, or cotton. These fibers are characterized as having very high elastic modulus, excellent creep properties, very high breaking strength, high initial yield strength and low cost. Such fiber properties are crucial to the design of an economical/high performance beverage container to replace metal cans.

Fiber strand dimensions are characterized by their weight per unit length (or its reciprocal) in terms of yield, in units of meters per kg (yards per pound) or in terms of denier. Denier is a measure of strand diameter for a given fiber type.

Each fiber strand is made up of many small filaments held together with sizing material. For example, Celanese Type × 785 PET fiber has a strand diameter calculated to be 0.37 mm (14.5 mils) when in a cylindrical state and it is made up of 74 filaments of 0.036 mm (1.4 mil) diameter each. When this fiber is wound under tension, it flattens out on the mandrel to a width of 0.77 mm about (30.5 mils) and a height of about 0.076 mm (3 mils). This flattening is very beneficial from a performance/cost perspective since it allows the core to be covered by thin, economic layers of PET fibers. These fibers inhibit creep of the underlying thermoplastic core.

It is quite noteworthy that it is not necessary completely to cover the thermoplastic core with fibers to gain the benefit of their superior mechanical properties.

Fibers wound about a 6.6 cm (2.6 inch) diameter core at 60°C for example make a complete revolution in 12 cm (4.72 inches) of cylinder length. This is the band width for a 60° winding angle.

Preferably two layers are used, each with a winding angle with respect to the axis of the cylinder which is the negative of the other, viz. ±60°. This creates a balance of forces which prevents twisting of the cylinder when under pressure.

In each layer, 136 fibers of a width of 0.77 mm of (30.5 mils) would be required for a complete coverage of the core, calculated by dividing the band width by the fiber width and multiplying by the sine of the winding angle.

Example 2 - Fiber Winding

Fibers were wound on a 0.33 mm (13 mil) polypropylene extruded tube using a McClean Anderson Model 1, filament winder at Westhollow Research Center. Test set A was carried out with glass and PET fiber available from previous filament winding and pultrusion work. Test sets B and C were carried out with Celanese Type 785 PET seatbelt cord of 93.2 tex (840 denier). Dimensions of this fiber and other typical candidate fibers which were on hand, PPG, ECG 75 glass, and Allied IW69 denier PET are given in Table 2.

Static burst tests were carried out in the existing pipe testing apparatus according to a modification of the ASTM test standards Test No. D 1599. Test cylinders were cut to lengths of at least 25.4 cm (ten inches) from the wound specimens. Special end plugs were designed after trials of numerous designs. The specimens were immersed in the water bath, filled with water, and pressurized with nitrogen rapidly until they burst.

Long term creep tests were carried out by pressuring specimens to 0.38 MPa gauge (55 psig) at room temperature in an ambient air environment. The conditions after a few seconds represent the initial conditions after can filling and it is the swelling which occurs after this period which is relevant to creep performance.

Short term high temperature creep tests were also carried out. Specimens were immersed in the hot water bath at 43°C (110°F) filled with water, and pressurized to 0.69 MPa gauge (100 psig) with nitrogen. This condition was more severe than required for a carbonated beverage container to emphasize problem areas which require further study, thus there was <u>no</u> adherence to the ASTM test specification of holding the speciment for thirty (30) minutes before beginning measurements. The change in volume with time was recorded by photography. The first volume swell picture was taken at the time that the pressure gauge on the waterbath holding tank indicated 0.69 MPa gauge (100 psig). The radius of the specimen at various axial positions and the height were recorded, and the volume calculated. Base conditions were chosen after temperature and pressure were established (arbitrarily five minutes into the test) for evaluation of long term creep and volume swell. Volume changes after this time represent the effects of creep under the constant, very severe conditions of 0.69 MPa gauge and 43°C (100 psig and 110°F).

RESULTS

Test Set A

The first set, Set A, was carried out to screen effects of fiber thickness, balanced versus unbalanced fiber layers and the fole of adhesive for glass and PET fibers. All wound specimens passed the quick burst test by exceeding 0.69 MPa gauge and 43°C (100 psig pressure at 110°F) and none exhibited observable volume expansion, as seen in Table 3.

Presence or absence of adhesive, presence or absence of balanced layers of fibers, and fiber thickness were varied. Unbalanced specimens exhibited some twisting. The fiber winding angle was 89°.

A 0.05 mm (two mil) outer surface of Hercules T-503 oriented polypropylene film was used for handling purposes.

RESULTS

Test Sets B and C

Test Set B was designed to provide performance data on PET fiber wound layers on the polypropylene tube combined in accordance with the expected stress and strain response of the composite container. Test Set B was undertaken to test the use of 840 denier PET fiber. This fiber was selected becuse it was relatively fine in diameter (Tire cord is typically 111 tex (1,000 denier)) and has an enhanced tendency to flatten. Flattening occurs because it is composed of individual filaments which are fewer in number, but thicker than those used in tire cord. The filament diameter was 0.036 mm (1.4 mils). Fiber surface coverage was varied and a winding angle of ±60 degrees was used although various different winding angles may be calculated and used other than 60°. The calculated stresses in a pressurized cylinder are such that those in the hoop direction are twice those in the axial direction. The optimum angle of orientation of the fibers to avoid bursting can be determined based upon the stiffness and strength properties of both the polypropylene tube and the PET fibers so as to provide the required strength ratio in the hoop and in the axial directions. The analysis shows such an angle to be about ± 60 degrees from the axis of the cylindrical container.

Test Set C was developed to improve fiber winding techniques and provide a better set of specimens for long term creep test, and seaming tests and adhesion tests.

Specimens of surface coverage of PET fibers of 0-71% per layer were tested in Set B described in Table 4, while specimens of 37-100% coverage per layer were tested in Set C, described in Table 5. All test specimens in both sets B and C were constructed by winding two layers of fiber about the core in a balanced fashion, with winding angles of +60° and -60° with respect to the axis.

It was observed that 136 strands of fiber covered 100% of the core. Surface coverage per layer was measured by counting the number of strands on a specimen and dividing by 136. Fiber layer thicknesses were measured by calipers and found to be 0.15 to 0.18 mm (6 to 7 mils) for two layers for the high coverage cases. (See Tables 4 and 5). Fiber raw materials costs were estimated by weighing the amount of fiber on a specimen. A PET fiber price of US $1.40 per 0.453 kg (1 lb) was used.

Specimens in Test B were subject to static burst after completing a 4-hour creep test at 43°C (110°F). Burst pressure equaled or exceeded 0.69 MPa gauge (100 psig) for all specimens tested of surface coverage of 25% per layer or greater (See Table 4). Burst pressure for the 71% coverage per layer specimen exceeded 2.07 MPa gauge (300 psig).

One sample of 53% fiber coverage per layer from test set B and three samples 54.5%, 72% and 100% fiber coverage per layer were subjected to long term creep tests for 18 weeks at room temperature and 0.38 MPa gauge (55 psig) internal nitrogen pressure. Samples exhibited between 0-4% volume swell after an equilibration period of several minutes. Growth was in the radial rather than the axial direction. Swelling in the equilibration period was 1-2%. This swelling may occur during filling of containers and should be taken into account in can design.

It is important that excellent resistance to swelling is exhibited by samples of lower fiber coverage as well as higher fiber coverage. This illustrates the surprising capability of the fibers to inhibit creep of the thermoplastic core even when not in direct contact at every location on the surface.

Specimens from sets B and C were subject to short term creep tests at 43°C and 0.69 MPa gauge (110°F and 100 psig). Volumetric swelling was noted over three time periods, zero to 5 seconds, 5 seconds to 5 minutes, and 5 minutes to 4 hours. The "Pressurization" time period represents pressurization to 0.69 MPa gauge (100 psig), a second "Early Period" to establish temperature equilibrium, and finally a "Terminal Period" of long duration.

A summary of test results show the following ranges of swelling:

| Time Period | Volumetric Swell | | |
|---|---|---|---|
| | 0.12% Coverage | 36-53% Coverage | 70-90% Coverage |
| Per Layer | Per Layer | Per Layer | |
| Pressurization (0-5 s) | Burst | 4-5% | 4-5% |
| Early Period (5 s-5 min.) | -- | 7-14% | 3-5% |
| Terminal Period (5 min-4 h) | -- | 2-11% | 0-3% |

Rejection of one specific data point in the Early Period for the 36% per layer coverage specimen would reduce the volumetric swell reported herein for the Terminal Period. Results for each specimen are for the Terminal Period and are presented in Tables 4 and 5.

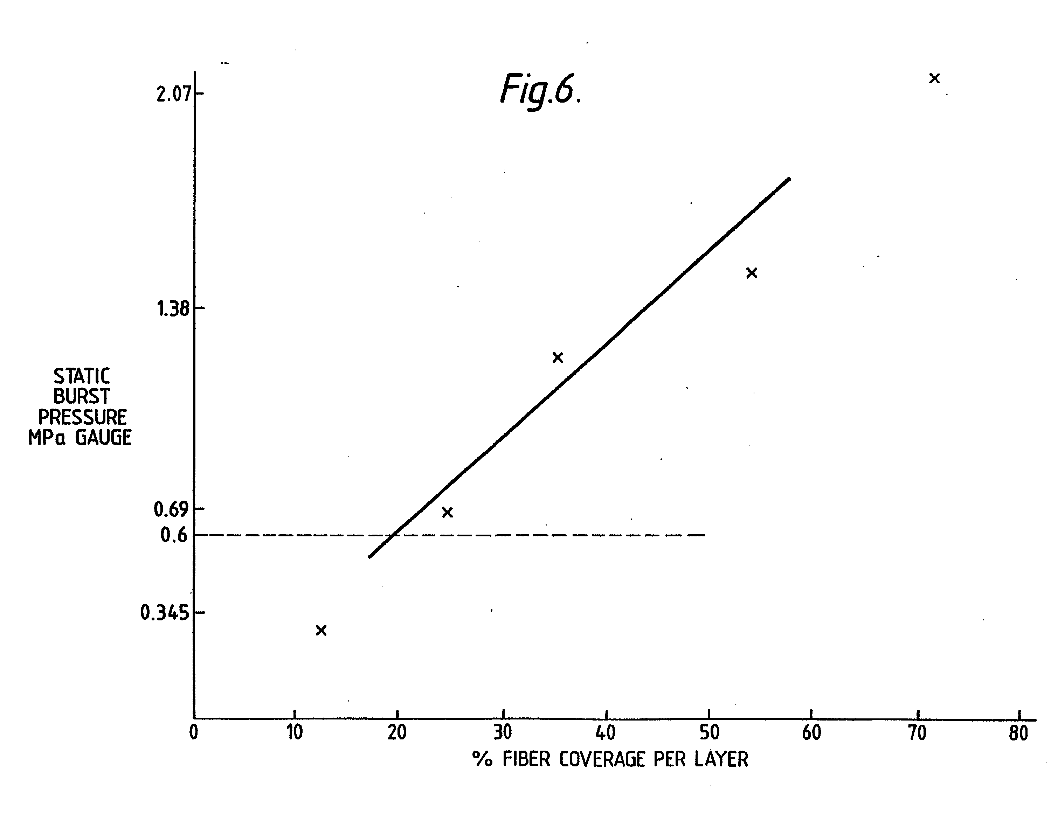

Initial volume swell is a function of fiber coverage, and can be controlled through it, but surprisingly, long duration volume swell is low even for a structure with as little as 53% fiber coverage per layer. The volume swell at 35% fiber coverage may be reduced further by either (1) wrapping some of the fibers in an axial direction, (2) providing a protective layer, such as an adhesive, over or under the fibers, (3) use of an outer wrap impermeable to water, or (4) use of a fiber grade with improved mechanical properties. Fig. 6 is a graph of burst pressure versus PET fiber coverage and supports a claim of 20% coverage as a lower limit of acceptability. A burst pressure requirement is established for the tested specimens of 0.6 MPa gauge at 35°C (87 psig at 95°F) equivalent to aluminum lid design requirements. Interpolation of test data suggests a fiber coverage of about 20% per layer is needed to achieve this pressure requirement. Note that test conditions are severe, 43°C compared to the required 35°C.

Note that the specifications for a commercial generic PET bottle rquire adequate performance at only 35°C rather than 43°C although the time period is longer. It has been found in practice that the liquid temperature in a container seldom exceeds 35°C because of the long time required for warming even when exposed to very high ambient temperatures. Specimens with fiber coverage of 70-90% exhibited volumetric swell no greater than 6% after pressurization to 0.69 MPa gauge at 43°C the very severe conditions of testing.

Photomicrographs of 64x magnification were made of the surface of the polypropylene core after the short term creep tests were completed for specimens of 37% and 90% coverage per layer. Only in the specimen of lower coverage could the indentations created by previous contact with PET fibers be observed.

The lack of indentations of fibers into the polypropylene core for the higher surface coverage case suggests that creep of polypropylene relative to the PET fibers did not occur.

In conclusion, test specimens in which PET fiber coverage per layer was as low as 35% exhibited burst pressures over 1.21 MPa gauge (175 psig) after immersion in water at 43°C for four hours. This is well in excess of the vapor pressure of 0.6 MPa gauge of carbonated beverage at 35°C and in excess of the burst pressure of 0.28 MPa gauge (40 psig) of specimens uncovered by PET fiber. Long term creep tests run for 18 weeks at room temperature and 0.38 MPa gauge (55 psig) pressure with specimens of 53-100% fiber coverage showed that volume swell of 1-4% occurred after a brief equilibration period, with no apparent correlation with fiber coverage. Short term creep tests run for four hours at severe conditions of 43°C and 0.69 MPa gauge showed volume swell of 0-3% for specimens of 70-90% coverage per layer and 2-11% for specimens of 35-53% coverage per layer after a five minute equilibration period.

EP 0 213 834 B1

## TABLE 2

### DESCRIPTION OF FIBERS AVAILABLE FOR TESTING

| Material Thickness | Fiber Type | Standard Size | | | Filament Diameter | Strand Dimensions | | Layer (when wound) |
| --- | --- | --- | --- | --- | --- | --- | --- | --- |
| | | | | | | Cylindrical Diameter | | |
| | | | | | | Calculated | Measured | |
| | | yd/lb | denier | tex | (mils) mm | (mils) mm | (mils) mm | (mils) mm |
| Glass | OCF type 30 P346BX675 | 675 | 6622 | 736 | (0.525)0.013 | (29.5)0.75 | | (9) 0.23 |
| | PPG ECG75 | 7,500 | 576 | 64 | (0.375)0.0096 | (9)0.23 | (10.1)0.26 | |
| PET | Allied 1W74 | 4,470 | 1000 | 111 | (1)0.0254 | (15.9)0.40 | | |
| | Allied 21 strand material[a] | 212 | 21,000 | 2333 | (1) " | (73)1.85 | | (10)0.25 |
| | Allied 5 strand material[a] | 850 | 5,000 | 556 | (1) " | (36)0.91 | | |
| | Celanese 785 Seat Belt Fiber | 5,320 | 840 | 93.3 | (1.4)0.036 | (14.5)0.37 | | (2.5-4)0.06-0.1 |
| | Allied 1W69-LO-500 | 894 | 500 | 55.6 | (1)0.0254 | (11.2)0.28 | | |

a) These materials were created by Allied from the 1W74 base material.

EP 0 213 834 B1

## TABLE 3

### FIRST SCREEN FIBER TEST RESULTS (SET A)

| FIBER | WRAPS | BALANCED LAYERS[a] | FIBER BAND THICKNESS (mils) mm | ADHESIVE[b] | QUICK BURST Pass? | (Psig) | MPa gauge |
|---|---|---|---|---|---|---|---|
| Glass | 1 | no | (6)0.15 | yes | yes | (162) | 1.12 |
| | 1 | no | (6)0.15 | no | yes | (152) | 1.05 |
| | 2 | yes | (12)0.30 | no | yes | (172) | 1.19 |
| | 2 | yes | (12)0.30 | yes | yes | (147) | 1.01 |
| | 2 | no | (12)0.30 | yes | yes | (167) | 1.15 |
| | 2 | no | (12)0.30 | no | yes | (200) | 1.38 |
| PET | 1 | no | | no | yes | (162) | 1.12 |
| | 1 | no | | yes | yes | (117) | 0.81 |

a)  Balanced means each wrap at $\pm$ angle. An $89^{\circ}$ angle was used in tests.

b)  Adhesive was Shell Kraton® 1107 pressure sensitive.

c)  The is a 0.05 mm (2 mil) outer surface of Hercules T-503 OPP film on all specimens for handling purposes.

TABLE 4
FIBER TEST PROGRAM (SET B)
(All specimens consist of balanced layers of 93.3 tex PET fiber wound at $\pm$ 60°)

| SURFACE COVERAGE PER LAYER % | STRANDS PER PASS PER LAYER | WINDING PASSES PER LAYER | FIBER THICKNESS (TWO LAYERS) (mils) mm | STATIC BURST[a] (psig) MPa gauge | SHORT TERM SWELL[b] AT 43°C | FIBER RAW MATERIAL COST U.S. cents /CAN[d] | LONG TERM SWELL AT ROOM TEMPERATURE[c] |
|---|---|---|---|---|---|---|---|
| 71 | 24 | 4 | (6-7)0.15-0.18 | (>300) >2.07 | 0-3% | 1.50 | - - - |
| 53 | 24 | 3 | (6)0.15 | (>200) >1.38 | 2-5% | 1.12 | 3-4% |
| 35 | 24 | 2 | (3-4)0.076-0.1 | - - - | - - - | 0.75 | - - - |
| 35 | 12 | 4 | (4)0.1 | (175) 1.21 | - - - | 0.75 | - - - |
| 35 | 8 | 6 | (4-5)0.1-0.13 | - - - | - - - | 0.75 | - - - |
| 25 | 8 | 4 | (4-5) " | (100) 0.69 | HIGH | 0.54 | - - - |
| 12 | 4 | 4 | (4-5) " | (<40) <0.28 | HIGH (burst) | 0.22 | - - - |
| 0 | 0 | 0 | 0 | (<40) <0.28 | | | - - - |

a) After creep test at 43°C (110°F)
b) Change in volume between 5 minutes and 4 hours
c) Change in volume between 5 minutes and 18 weeks
d) Bases $1.40/0.453 kg price for PET fiber

TABLE 5
FIBER TEST PROGRAM (SET C)
(All specimens consist of balanced layers of 93.3 tex PET fiber wound at $\pm$ 60°)

| SURFACE COVERAGE PER LAYER % | STRANDS PER PASS PER LAYER | WINDING PASSES PER LAYER | FIBER THICKNESS (TWO LAYERS) (mils) mm | SHORT TERM SWELL AT 43°C [a] | LONG TERM SWELL AT ROOM TEMPERATURE [b] | FIBER RAW MATERIAL COST U.S. cents /CAN [c] |
|---|---|---|---|---|---|---|
| 100 | 68 | 2 | - - | - - | 2-3% | 2.00 |
| 90 | 61 | 2 | (7.5)0.19 | 0.1% | - - | 1.88 |
| 72 | 49 | 2 | (6.5)0.165 | 0-1% | 1-3% | 1.43 |
| 54.5 | 37 | 2 | (6.0)0.15 | - - | 1-3% | 1.00 |
| 37 | 25 | 2 | (3.5)0.09 | 4-11% | - - | 0.7 |

a)  Change in volume between 5 minutes and 4 hours
b)  Change in volume between 5 minutes and 18 weeks
c)  Basis PET fibers at U.S. $1.40/0.453 kg

## Claims

1. A beverage can for carbonated beverages which comprises a can wall made of a thermoplastic core and at least one fiber wound adhesive layer on said thermoplastic core, the can wall comprising a barrier layer being of low permeability to $CO_2$ and contiguous with either said thermoplastic core or said fiber wound adhesive layer or contained within said thermoplastic core or said fiber wound adhesive layer.

2. A beverage can according to claim 1, wherein the thermoplastic core is of polypropylene, polyethylene terephthlate, polyethylene or a polyketone and is either spirally wound or extruded.

3. A beverage can according to claim 1 or 2 wherein said fiber wound adhesive layer is of glass, polyethylene terephthlate, nylon, rayon or cotton.

4. A beverage can according to claim 1, 2 or 3 wherein said barrier layer is a vinylidene chloride copolymer or a hydrolyzed copolymer of vinyl acetate and ethylene.

5. A beverage can according to claim 1, wherein said thermoplastic core is of polypropylene, the fiber wound adhesive layer is of polyethylene terephthalate and wherein the barrier layer is of a hydrolyzed copolymer of vinyl acetate and ethylene.

6. A beverage can according to any one of the preceding claims wherein said core is extruded.

7. A beverage can according to any one of the preceding claims wherein each fiber wound adhesive layer provides at least 20% coverage.

## Patentansprüche

1. Getränkedose für kohlensäurehaltige Getränke, die eine Dosenwand aus einem thermoplastischen Kern und zumindest einer Faserwickel-Klebstoffschicht auf diesem thermoplastischen Kern aufweist, wobei die Dosenwand eine Sperrschicht mit niedriger Durchlässigkeit für $CO_2$ angrenzend entweder an den thermoplastischen Kern oder die Faserwickel-Klebstoffschicht oder innerhalb des thermoplastischen Kernes oder der Faserwickel-Klebstoffschicht aufweist.

2. Getränkedose nach Anspruch 1, bei welcher der thermoplastische Kern aus Polypropylen, Polyethylenterephthalat, Polyethylen oder einem Polyketon besteht und spiralförmig gewickelt oder extrudiert ist.

3. Getränkedose nach Anspruch 1 oder 2, bei welcher die Faserwickel-Klebstoffschicht aus Glas, Polyethylenterephthalat, Nylon, Rayon oder Baumwolle besteht.

4. Getränkedose nach einem der Ansprüche 1 bis 3, bei welcher die Sperrschicht ein Vinylidenchloridcopolymer oder ein hydrolysiertes Copolymer von Vinylacetat und Ethylen ist.

5. Getränkedose nach Anspruch 1, bei welcher der thermoplastische Kern aus Polypropylen besteht, die Faserwickel-Klebstoffschicht aus Polyethylenterephthalat besteht und bei welcher die Sperrschicht ein hydrolysiertes Copolymer von Vinylacetat und Ethylen ist.

6. Getränkedose nach einem der vorhergehenden Ansprüche, bei welcher der Kern extrudiert ist.

7. Getränkedose nach einem der vorhergehenden Ansprüche, bei welcher jede Faserwickel-Klebstoffschicht eine Bedeckung von zumindest 20% ergibt.

## Revendications

1. Boîte pour boissons, pour boissons gazeuses, qui comprend une paroi de boîte faite d'un cœur thermoplastique et d'au moins une couche adhésive à enroulement de fibres sur ledit cœur thermoplastique, la paroi de boîte comprenant une couche d'arrêt de faible perméabilité à $CO_2$ et contigüe avec soit ledit cœur thermoplastique soit ladite couche adhésive à enroulement de fibres ou contenue dans ledit cœur thermoplastique ou ladite couche adhésive à enroulement de fibres.

2. Boîte pour boissons selon la revendication 1, dans laquelle le cœur thermoplastique est en polypropylène, poly(téréphtalate d'éthylène), polyéthylène ou polycétone et est soit enroulé en spirale soit extrudé.

3. Boîte pour boissons selon la revendication 1 ou 2, dans laquelle ladite couche adhésive à enroulement de fibres est en verre, poly(téréphtalate d'éthylène), nylon, rayonne ou coton.

4. Boîte pour boissons selon l'une quelconque des revendications 1, 2 ou 3, dans laquelle ladite couche d'arrêt est un copolymère de chlorure de vinylidène ou un copolymère hydrolysé d'acétate de vinyle et d'éthylène.

5. Boîte pour boissons selon la revendication 1, dans laquelle ledit cœur thermoplastique est en polypropylène, la couche adhésive à enroulement de fibres est en poly(téréphtalate d'éthylène) et dans laquelle la couche d'arrêt est un copolymère hydrolysé d'acétate de vinyle et d'éthylène.

6. Boîte pour boissons selon l'une quelconque des revendications précédentes dans laquelle ledit cœur est extrudé.

7. Boîte pour boissons selon l'une quelconque des revendications précédentes, dans laquelle chaque couche adhésive à enroulement de fibres fournit au moins une couverture de 20%.

Fig.1.

*Fig.2.*

LUBRICANT 11
POLYPROPYLENE FILM 1,2,3
ADHESIVE 4
LATEX SARAN 5

PET FIBER 6,8
ADHESIVE 7

LABEL FILM 10

BOTTOMS 12
JOINING MATERIALS 13

CLEANING MATERIALS 14
BEVERAGE 15

TOPS 16
JOINING MATERIALS 17

| STEP 1 | STEP 2 | STEP 3 | STEP 4 | STEP 5 | STEP 6 | FILLED CANS |
|---|---|---|---|---|---|---|
| CORE MAKING | FIBER WINDING | LABEL AND CUT | BOTTOM JOINING | FILLING | TOP JOINING | |

EP 0 213 834 B1

*Fig.3.*

Fig.4.

Fig.5.

EP 0 213 834 B1

Fig.6.

STATIC
BURST
PRESSURE
MPa GAUGE

% FIBER COVERAGE PER LAYER

EP 0 213 834 B1